# EUROPEAN PATENT SPECIFICATION

(11) **EP 1 967 069 B1**
(45) Date of publication and mention of the grant of the patent: **11.05.2011**
(21) Application number: 07425136.4
(22) Date of filing: 08.03.2007
(51) Int. Cl.: A21B 5/02, A21D 13/00

(54) **Wafer sheet, corresponding production plate and method of use**
Waffelgrundkörper, zugehörige Waffelform und Produktionsmethode
Gaufre, moule à gaufres et méthode de production des gaufres

(43) Date of publication of application: 10.09.2008
(73) Proprietor: Soremartec S.A., 6700 Arlon (BE); Ferrero S.p.A., 12051 Alba (Cuneo) (IT); FERRERO OFFENE HANDELSGESELLSCHAFT m.b.H., 60599 Frankfurt (DE)
(72) Inventor: Foglia, Michelangelo, 12051 Alba (Cuneo) (IT); Massa, Luciano, 12042 Bra (Cuneo) (IT)
(74) Representative: Bosotti, Luciano

(56) References cited:
- EP-A1- 1 433 384
- EP-A2- 0 221 033
- WO-A-97/48282
- GB-A- 465 242

## Description

### Field of the invention

The present invention relates to techniques for processing wafer products. The invention has been developed with particular attention paid to the production of wafer products comprising at least one shell having a hollow shape (for example, a hemispherical dome-shape) that is generally coupled to a second shell having a hollow or plane shape, to form the product.

### Description of the relevant art

Various patent documents describe techniques for producing the aforesaid wafer products with general hollowed conformation.

These techniques have in common the fact of starting from a wafer comprising a core part (normally referred to as "carré"), in which the aforesaid hollowed parts are formed. The hollowed parts are then separated from the starting wafer with an action of cutting.

This action of cutting can be performed both in a direction orthogonal to the core part, as described in EP-A-1 433 384, and by operating on an "equatorial" plane with respect to the hollowed parts, i.e., a plane that extends in the same direction as the core part of the wafers. In the latter case, the operation of cutting can be performed with different means: for example, a band saw in the case of EP-A-0 054 229 or WO-A-97/48282, an array of disk saws in the case of EP-A-0 221 033, or a rotary tool substantially resembling a miller, in the case of EP-A-0 968 653. In the case of the solution described in EP-A-0 054 229 or WO-A-97/48282, the action of cutting has the effect of separating the hollowed parts from the plane core part or "carré". In the case of the solutions described in EP-A-0 221 033 and EP-A-0 968 653, the action of cutting also involves the plane core part, which is made to crumble and is removed usually by suction means.

In any case, to perform the cutting operation properly it is necessary to ensure that the starting wafer is in a correct and exactly determined position (corresponding in most instances to a height) with respect to the device that performs the cutting operation.

In the solution described in EP-A-0 054 229, the above result is obtained by arranging the starting wafer in an alveolated mould, i.e., a mould provided with cavities that are to receive within them the hollowed parts of the wafers. These cavities are chosen in such a way as to have a depth at least slightly smaller than the maximum height of the hollowed parts. When the wafer is located in the mould, the "polar" portions of the hollowed parts of the wafer rest against the bottom of the cavity of the mould (usually kept with the openings facing upwards) and, consequently, the plane part or "carré" of the wafer comes to be raised (typically by a few millimetres) with respect to the front surface of the mould. There is thus formed, between the aforesaid front surface of the mould and the surface of the core part of the wafer facing it, the space of separation in which the cutting device can intervene.

The above solution enables assurance of a high degree of precision in positioning the wafer, which normally is pressed against the mould by a conveying device, such as a motor-driven belt conveyor, whilst the wafer advances with respect to the cutting device. The pressure exerted on the wafer during the cutting operation guarantees, in fact, that the wafer is kept throughout its extension on a plane. In the case where no pressure were to be applied on the wafer, this would tend to bend as a result of the action of the cutting means, preventing execution of a regular cut.

The above solution has the limitation represented by the fact that the mould used for supporting the wafer during the cutting operation (a mould that then receives the hollowed parts separated from the core part) cannot be used for subsequent operations (for example, filling, etc.) performed on the hollowed parts of wafer. The reduced depth of the cavities of the mould means in fact that the mouth edges of the hollowed parts project at least slightly with respect to the front surface of the mould. To carry out subsequent operations of treatment (such as filling or coupling of homologous hollowed parts with semicircular section so as to obtain, for example, a spherical wafer shell), it is necessary to transfer the aforesaid hollowed parts into a mould provided with deeper openings so that the mouth edges of the hollowed parts of wafer will be aligned with the front surface of the mould. This operation of transfer constitutes a considerable complication of the line lay-out.

In the solutions described in EP-A-0 221 033 and EP-A-0 968 653, this drawback is overcome by placing the wafer to be cut in alveolated moulds, the cavities of which are able to receive the hollowed parts of wafer completely. To enable performance of the cutting operation, when the mould with the wafer within it advances towards the cutting device, pusher elements intervene on the polar portions of the hollowed parts penetrating through openings provided in the bottom parts of the cavities of the mould and raising the wafer to the height desired for proper interaction with the cutting device.

The above solution, which has been used with full satisfaction and success for many years, imposes the need, however, to associate to the cutting device the raising mechanism described previously. This mechanism can end up being even rather complex, also considering that usually it is necessary to set a raising element for each hollowed part. In addition, the raising element must be able to provide a gripping portion (typically suction) on the hollowed part on which it intervenes.

Document EP-A-0221033 was therefore taken as a model for the preamble of Claim 1

### Object and summary of the present invention

The object of the present invention is to provide a solution that, maintaining the positive aspects of the solutions described previously, will avoid the drawbacks linked to said preceding solutions, as outlined above.

According to the present invention, this object is achieved thanks to a method having the characteristics recalled specifically in Claim 1. Advantageous developments of the invention form the subject of the subclaims. The invention also relates to a wafer for carrying out said method, as well as a plate for making said wafer.

The claims form an integral part of the disclosure of the invention provided herein.

### Brief description of the annexed figures

The invention will now be described, purely by way of non-limiting example, with reference to the annexed plate of drawings, in which:

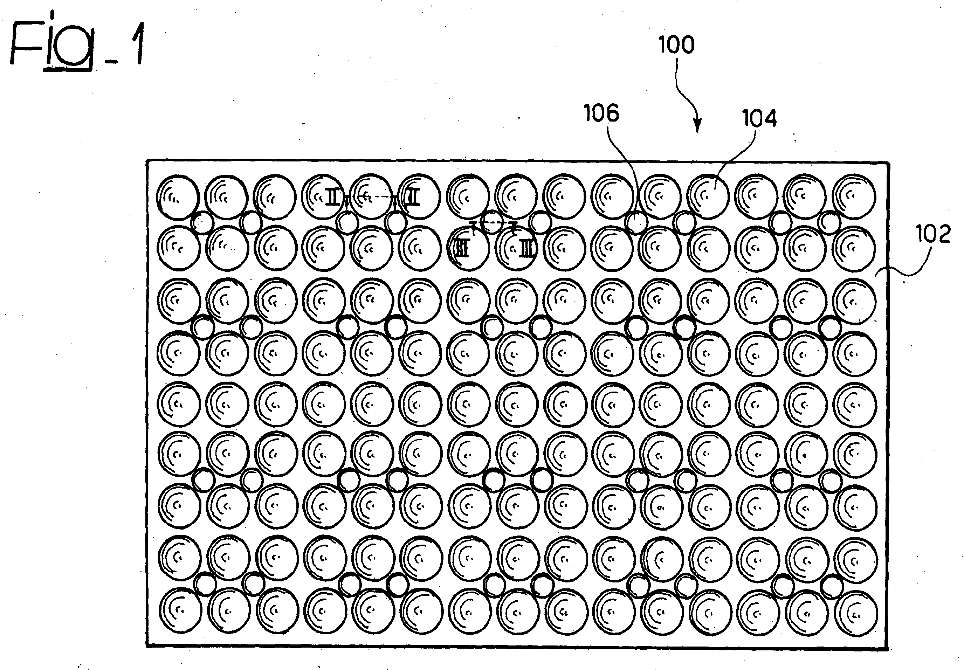

- Figure 1 is a plan view of a wafer as described herein;
- Figure 2 illustrates a partial cross-sectional view according to the line II-II of Figure 1;
- Figure 3 illustrates a partial cross-sectional view according to the line III-III of Figure 1;
- Figure 4 is a schematic illustration of the modalities of treatment of the wafer described herein; and
- Figure 5 is a partial cross-sectional view of a mould (plate) prearranged to form the wafer described herein.

### Detailed description of exemplary embodiments

The solution forming the subject of the present application will be described with reference, by way of example, to the production of foodstuffs comprising a spherical wafer shell obtained via the frontal juxtaposition of two half-shells having a substantially hemispherical shape.

Products of this type are known in the art. In this connection, reference may be made to the confectionery products sold under the trademarks Ferrero Rocher® or Confetteria Raffaello® of the companies of the Ferrero group. The same companies also sell other products (see, for example, the confectionery products sold under the trademarks Kinder Maxi King®, Happy Hippo®) comprising half-shells once again having a hollowed shape but different from the hemispherical one.

These half-shells can be produced by resorting to the techniques of cutting in the "equatorial" plane described in the various documents already cited in the introductory part of the present description.

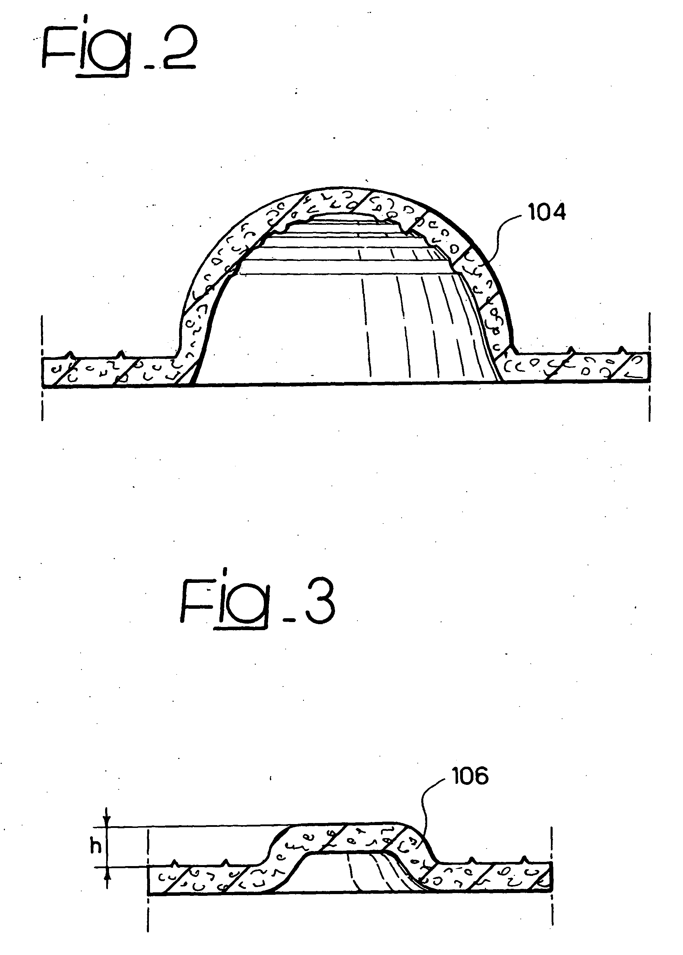

The half-shells in question (it is to be recalled that the reference to hemispherical half-shells herein has a purely exemplary character in so far as what is described and illustrated herein is applicable in general to hollowed parts having any shape and dimensions) are obtained starting from a wafer 100 in which it is in general possible to distinguish:
- a core plane (commonly referred to as "carré") 102; and
- an array of hemispherical (or, in general, hollowed) formations 104; these formations, which are illustrated at an enlarged scale in a cross-sectional view in Figure 2, are initially integral with the core plane 102 and are then to be separated therefrom with an operation of cutting carried out in general in a direction parallel to the direction of extension of the core plane 102.

An important characteristic of the solution described herein lies in the fact that the wafer 100 has a further array of approximately hollowed formations, designated by 106. These further formations, one of which is illustrated at an enlarged scale in a cross-sectional view in Figure 3, project from the core plane 102 always on the same side as the one from which the hollowed formations 104 project.

The array of the formations 106 is staggered with respect to the array of the formations 104, in the sense that the formations 106 are arranged in areas corresponding to parts and regions of the core part 102 in which the hollowed formations 104 are not present. The formations 106 can be ordered in rows, or else in rows and columns. Furthermore, according to one embodiment of the invention, the formations 106 can be ordered in pairs so that the wafer will comprise groups formed by a pair of the hollowed formations 104 and a pair of the formations of the further array 106 arranged at the vertices of a quadrilateral, such as a rhombus.

The formations 106 thus have a depth (height) smaller than the hollowed formations 104. Just to clarify the description (without this implying any limitation of the scope of the invention), the formations 106 have a height h (i.e., the amount they protrude with respect to the surface of the core part 102) correlated to the depth of the hollowed formations 104 and preferably comprised between 0.5 mm and 10 mm. Preferably the height h is approximately equal to the thickness of the core part 102 (a thickness that is typically in the region of 1- 3 mm). In a preferred way, the formations 106 have a height h substantially equal to or larger than the thickness of the core part 102.

In a particularly preferred way, the formations 106 have a general "mesa" configuration, i.e., they present, if viewed from the side of their concavity, basically as trays with a plane bottom wall (parallel to the general plane of extension of the core part 102); in a further particularly preferred way, the formations 106 substantially resemble circular buttons having a diameter in the region of 10 mm.

The formations 106 could on the other hand have different shapes and present, for example, a general cup-like or V-shaped conformation.

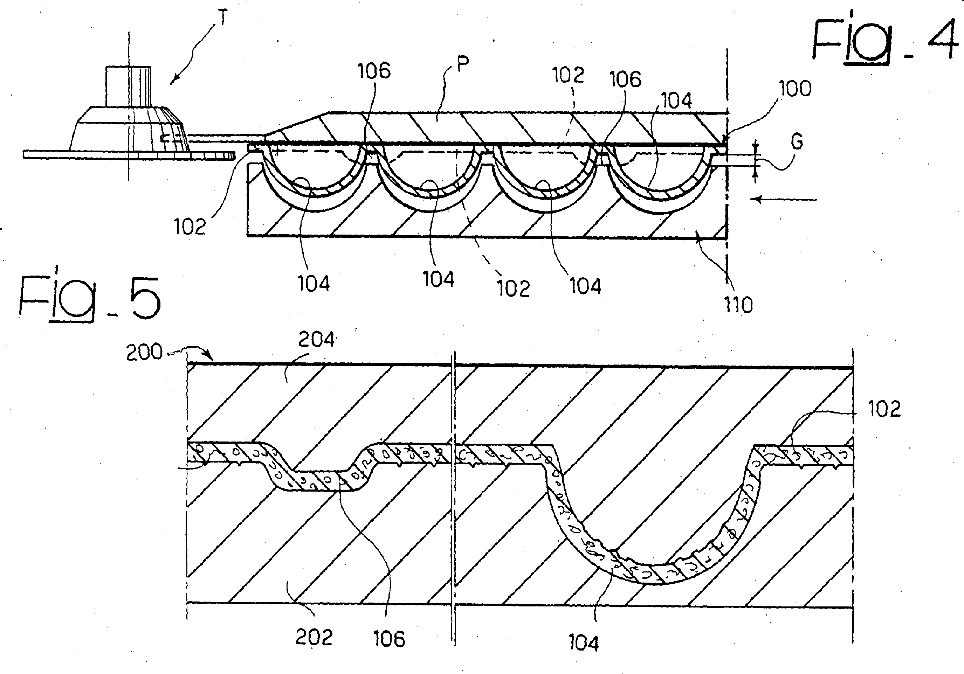

When, as schematically illustrated in Figure 4, the wafer 100 is set in an alveolated mould 110 so as to proceed to the cutting operation (according to the modalities described in the documents Nos. EP-A-0 054 229, WO-A-97/48282, EP-A-0 221 033, and EP-A-0 968 653), the net effect of the presence of the formations 106 is to cause, even when the cavities of the mould 110 are able to receive the hollowed parts 104 completely, the formations 106 to bear upon the front surface of the mould 110 and keep the core part 102 raised by an amount G equal to their height, designated by h.

In this way, it is possible to establish the desired distance between the core part (or "carré") 102 and the front surface of the mould 110 to perform the operation of cutting properly using a tool T (whatever this may be).

In particular, the formations 106 constitute, for the core part 102, a sort of array of feet for resting on the front surface of the mould 110 such as to keep the core part 102 (in particular when the core part 102 is pressed towards the mould 110, for example by a pressure pad P) at a constant height, throughout the surface development of the wafers 100, with respect to the front surface of the mould 110. This arrangement is guaranteed also in the case where (as occurs normally as a result of the very mechanism of production of the wafer 100) the core part 102 has internal stresses that tend to cause it to bend.

For this purpose, during the step of cutting, the wafers 100 are kept under pressure against the moulds 110 (for example, via the pressure pad) so as to prevent any bending and enable cutting to be performed at a controlled and desired height throughout the area of the wafer.

With the solution described herein, it is possible to use a mould 110 that is able to receive the hollowed parts 104 properly once separated from the core part 102 by the cutting operation, without there being necessary the transfer into moulds different from the one used for performing the cutting operation.

At the same time, it is possible to do without the mechanism for raising the wafer, which, by acting with pusher elements that penetrate through the polar parts (that are to be perforated) of the hollowed parts of the receiving mould, raise the wafer, bringing it to the desired height for intervention of the cutting device.

In the solution described herein, this effect of raising is instead provided exclusively by the formations 106, which, moreover, are eliminated (or at least separated from the core part 102) precisely by the same action of cutting that leads to the separation of the hollowed parts 104 (see in this connection Figure 4).

In any case, the array of the formations 106 is in a number and presents a distribution of formations such as to distribute uniformly over the front surface of the mould 110, functioning as contrast surface, the pressure exerted on the wafer 100 - for example, via the pressure pad P - during performance of the cutting operation (whatever the way in which this is done), preventing bending of the wafer 100 in any area thereof.

A wafer 100 having the characteristics referred to can be obtained, according to known criteria, with an oven plate such as the plate 200 illustrated in Figure 5.

The oven plate for production of the wafers 200 in question comprises two complementary parts, i.e., a plate 202 and a counter plate 204 that have surface morphologies such as to reproduce in a complementary way the hollowed formations 104 and the formations 106 that are to constitute the "buttons" or "feet" that keep the wafer 100 raised during the cutting operation described previously.

In this connection, the experiments conducted by the present applicant show that the "mesa" or tray-shaped conformation with plane bottom part, as may be inferred from the annexed plate of drawings, is preferential for the purposes of carrying out the operation of baking of the wafer batter contained between the plate 202 and the counter plate 204 that leads to the formation of the wafer 100. The present applicant has in fact been able to note that different conformations (for example, formations 106 that reproduce - on a smaller scale - the same conformation as that of the formations 104) can give rise in some circumstances to a wafer 100 with a differentiated degree of baking in an area corresponding to the formations 106 and the formations 104. In some cases, this difference can prove undesirable (for example, owing to an at least partial burning of the formations 106) and is thus to be avoided.

It will be appreciated that the solution described herein is applicable also in the case where the wafer 100 presents differentiated thicknesses in areas corresponding to the core part 102 and the formations 104, as described, for example, in WO-A-97/48282. The formations 106, which project from the core part 102 and form, on the side opposite to the projection, a cavity in the core part 102 itself, can also be used to form a coupling having a shape of the male and female type between portions of wafer that are to be coupled together when the operations of filling or the like are carried out. In this case, it may be envisaged that the formations 106, herein all represented as projecting from the core part 102 on the same side as that on which the formations 104 project, may project on opposite sides of the core part 102 itself.

It follows that, without prejudice to the principle of the invention, the details of construction and the embodiments may vary widely with respect to what is described and illustrated herein purely by way of non-limiting example, without thereby departing from the scope of the invention, as defined by the annexed claims.

## Claims

1. A method for making wafer bodies having a general hollowed conformation, the method comprising the operations of:
- providing a wafer (100) having a plane core part or "carré" (102) and an array of hollowed formations (104) projecting for a given height with respect to said core part (102);
- setting said wafer (100) in an alveolated mould (110) having a front surface, in which cavities are made for receiving said hollowed formations (104) of the wafer, and
- subjecting said wafer (100) to an action of cutting (T) that separates said hollowed parts (104) from said core part (102)
**characterised in that** it comprises the operation of:
- providing said wafer (100) with a further array of formations (106) set between said hollowed formations (104) and projecting from said core part (102) on the same side as said hollowed formations (104) for a height (h) smaller than said given height of said hollowed formations (104),
- setting said wafer (100) in said alveolated mould (110) with the formations (106) of said further array resting on said front surface of said mould (110) so as to keep said core part (102) at a distance from said front surface of the mould by a gap (G) of a width defined by the height (h) of said formations (106) of said further array.

2. The method according to Claim 1, in which said cutting operation is performed in said gap (G) of a width defined by the height (h) of said formations (106) of said further array.

3. The method according to Claim 1, in which said cutting operation (T) leads to crumbling of said core part (102).

4. A wafer for carrying out the method according to any one of Claims 1 to 3, said wafer having a plane core part or "carré" (102) and an array of hollowed formations (104) projecting for a given height with respect to said core part (102), said wafer having a further array of formations (106) set between said hollowed formations (104) and projecting from said core part (102) on the same side as said hollowed formations (104) for a height (h) smaller than said given height of said hollowed formations (104).

5. The wafer according to claim 4, in which the formations of said further array (106) have a height (h) correlated to the depth of the hollowed formations (104), preferably comprised between 0.5 mm and 10 mm.

6. The wafer according to one of the preceding claims 4 or 5, in which said further array of formations (106) comprises formations (106) arranged in rows and/or columns.

7. The wafer according to any one of the preceding claims 4 to 6, in which the formations of said further array (106) have a general tray-like conformation with a plane bottom wall.

8. The wafer according to any one of Claims 4 to 7, in which the formations of said further array (106) have a general cup-like conformation.

9. The wafer according to any one of Claims 4 to 8, in which the formations of said further array (106) are generally V-shaped.

10. The wafer according to any one of the preceding claims 4 to 9, in which said core part (102) has a given thickness and in which the height (h) of the formations of said further array (106) is substantially equal to or larger than said given thickness.

11. The wafer according to any one of the preceding claims 4 to 10, in which said hollowed formations (104) have a height comprised between 1 and 30 mm.

12. The wafer according to any one of the preceding claims 4 to 11, in which the formations (106) of said further array are in a number and have a distribution such as to distribute uniformly over a contrast surface (110) a pressure (P) exerted on the wafer, preventing bending of the wafer itself in any area thereof.

13. A plate for making a wafer according to any one of Claims 4 to 12, said plate comprising complementary half-plates (202, 204) jointly defining between them a space for receiving a batter which, after baking, is to constitute said wafer.

## Patentansprüche

1. Verfahren zur Herstellung von Waffelkörpern, die eine im Wesentlichen hohle Gestalt aufweisen, wobei das Verfahren als Schritte beinhaltet:
- das zur Verfügung Stellen einer Waffel (100), die einen ebenen Kernteil oder "Carré" (102) und ein Gitter aus hohlen Strukturen (104) aufweist, die bis zu einer vorgegebenen Höhe bezüglich des Kernteils (102) hervorragen,
- das Legen der Waffel (100) in eine mit Zellen versehene Form (110), die eine vordere Fläche aufweist, in der Ausnehmungen vorgesehen sind, um die hohlen Strukturen (104) der Waffel aufzunehmen, und
- das Unterwerfen der Waffel (100) unter eine Schnitthandlung (T), welche die hohlen Teile (104) von dem Kernteil (102) trennt,
**dadurch gekennzeichnet, dass** es als Schritt aufweist:
- das Versehen der Waffel (100) mit einem weiteren Gitter an Strukturen (106), die zwischen den hohlen Strukturen (104) positioniert sind und von dem Kernteil (102) auf der gleichen Seite wie die hohlen Strukturen (104) mit einer Höhe (h), die kleiner als die vorgegebene Höhe der hohlen Strukturen (104) ist, hervorstehen,
- das Legen der Waffel (100) in die mit Zellen versehene Form (110), wobei die Strukturen (106) des weiteren Gitters auf der vorderen Oberfläche der Form (110) ruhen, so dass der Kernteil (102) in einem Abstand zu der vorderen Oberfläche der Form durch eine Lücke (G) von einer Dicke, die durch die Höhe (h) der Strukturen (106) des weiteren Gitters definiert ist, gehalten wird.

2. Verfahren nach Anspruch 1, in dem der Schneideschritt in der Lücke (G) von einer Breite, die durch die Höhe (h) der Strukturen (106) des zusätzlichen Gitters definiert ist, ausgeführt wird.

3. Verfahren nach Anspruch 1, wobei der Schneideschritt (T) zu einem Zerbröckeln des Kernteils (102) führt.

4. Waffel zum Ausführen des Verfahrens nach einem der Ansprüche 1 bis 3, wobei die Waffel einen ebenen Kernteil oder "Carré" (102) und ein Gitter an hohlen Strukturen (104) aufweist, die bis zu einer vorgegebenen Höhe bezüglich des Kernteils (102) hervorragen, wobei die Waffel ein zusätzliches Gitter an Strukturen (106) aufweist, die zwischen den hohlen Strukturen (104) positioniert sind und von dem Kernteil (102) auf der gleichen Seite wie die hohlen Strukturen (104) mit einer Höhe (h), die kleiner als die vorgegebene Höhe der hohlen Strukturen (104) ist, hervorstehen.

5. Waffel nach Anspruch 4, in der die Strukturen des zusätzlichen Gitters (106) eine Höhe (h), die mit der Tiefe der hohlen Strukturen (104) korreliert, aufweisen, die vorzugsweise zwischen 0,5 mm und 10 mm liegt.

6. Waffel nach einem der vorherigen Ansprüche 4 oder 5, in der das zusätzliche Gitter an Strukturen (106) Strukturen (106), die in Reihen und/oder Spalten angeordnet sind, aufweist.

7. Waffel nach einem der vorherigen Ansprüche 4 bis 6, in der die Strukturen des zusätzlichen Gitters (106) eine im Wesentlichen tablettartige Gestalt mit einer ebenen unteren Wand aufweisen.

8. Waffel nach einem der Ansprüche 4 bis 7, in der die Strukturen des zusätzlichen Gitters (106) eine im Wesentlichen schalenförmige Gestalt aufweisen.

9. Waffel nach einem der Ansprüche 4 bis 8, in der die Strukturen des zusätzlichen Gitters (106) im Wesentlichen V-förmig sind.

10. Waffel nach einem der vorherigen Ansprüche 4 bis 9, in welcher der Kernteil (102) eine vorgegebene Dicke aufweist und in der die Höhe (h) der Strukturen des zusätzlichen Gitters (106) im Wesentlichen größer oder gleich der vorgegebenen Dicke ist.

11. Waffel nach einem der vorherigen Ansprüche 4 bis 10, in der die hohlen Strukturen (104) eine Höhe aufweisen, die zwischen 1 und 30 mm liegt.

12. Waffel nach einem der vorherigen Ansprüche 4 bis 11, in der die Strukturen (106) des zusätzlichen Gitters in einer Anzahl sind und eine Verteilung haben, so dass sie über eine Gegenoberfläche (110) einen Druck (P), der auf die Waffel ausgeübt wird, gleichförmig verteilen, um somit ein Biegen der Waffel selbst in jedem Bereich davon zu vermeiden.

13. Platte zum Herstellen einer Waffel nach einem der Ansprüche 4 bis 12, wobei die Platte zueinander passende Halbplatten (202, 204) aufweist, die gemeinsam zwischen sich einen Raum definieren, der einen Backteig aufnimmt, der, nach dem Backen, die Waffel bilden soll.

## Revendications

1. Procédé pour fabriquer des corps de gaufrettes ayant une conformation généralement creuse, le procédé comprenant les opérations consistant à :
- fournir une gaufrette (100) ayant une partie de coeur plane ou un "carré" (102) et un ensemble de formations creuses (104) faisant saillie sur une hauteur donnée par rapport à ladite partie de coeur (102) ;
- disposer ladite gaufrette (100) dans un moule alvéolé (110) ayant une surface avant, les cavités étant destinées à recevoir lesdites formations creuses (104) de la gaufrette, et
- soumettre ladite gaufrette (100) à une action de coupe (T) qui sépare lesdites parties creuses (104) de ladite partie de coeur (102)
**caractérisé en ce que** le procédé comprend l'opération consistant à :
- doter ladite gaufrette (100) d'un ensemble supplémentaire de formations (106) disposées entre lesdites formations creuses (104) et faisant saillie depuis ladite partie de coeur (102) sur le même côté que lesdites formations creuses (104) sur une hauteur (h) inférieure à ladite hauteur donnée desdites formations creuses (104),
- disposer ladite gaufrette (100) dans ledit moule alvéolé (110), les formations (106) dudit ensemble supplémentaire reposant sur ladite surface avant dudit moule (110) afin de garder ladite partie de coeur (102) à une distance de ladite surface avant du moule correspondant à un espace (G) d'une largeur définie par la hauteur (h) desdites formations (106) dudit ensemble supplémentaire.

2. Procédé selon la revendication 1, dans lequel ladite action de coupe est réalisée dans ledit espace (G) d'une largeur définie par la hauteur (h) desdites formations (106) dudit ensemble supplémentaire.

3. Procédé selon la revendication 1, dans lequel ladite action de coupe (T) aboutit à une désagrégation de ladite partie de coeur (102).

4. Gaufrette pour la mise en oeuvre du procédé selon l'une quelconque des revendications 1 à 3, ladite gaufrette ayant une partie de coeur plane ou un "carré" (102) et un ensemble de formations creuses (104) faisant saillie sur une hauteur donnée par rapport à ladite partie de coeur (102), ladite gaufrette comportant un ensemble supplémentaire de formations (106) disposées entre lesdites formations creuses (104) et faisant saillie depuis ladite partie de coeur (102) sur le même côté que lesdites formations creuses (104) sur une hauteur (h) inférieure à ladite hauteur donnée desdites formations creuses (104).

5. Gaufrette selon la revendication 4, dans laquelle les formations dudit ensemble supplémentaire (106) ont une hauteur (h) en corrélation avec la profondeur des formations creuses (104), comprise, de préférence, entre 0,5 mm et 10 mm.

6. Gaufrette selon l'une quelconque des revendications précédentes 4 ou 5, dans laquelle ledit ensemble supplémentaire de formations (106) comprend des formations (106) agencées en rangées et/ou colonnes.

7. Gaufrette selon l'une quelconque des revendications précédentes 4 à 6, dans laquelle les formations dudit ensemble supplémentaire (106) ont une conformation générale en forme de plateau avec une paroi inférieure plane.

8. Gaufrette selon l'une quelconque des revendications précédentes 4 à 7, dans laquelle les formations dudit ensemble supplémentaire (106) ont une conformation générale en coupelle.

9. Gaufrette selon l'une quelconque des revendications précédentes 4 à 8, dans laquelle les formations dudit ensemble supplémentaire (106) ont généralement la forme d'un V.

10. Gaufrette selon l'une quelconque des revendications précédentes 4 à 9, dans laquelle ladite partie de coeur (102) a une épaisseur donnée et dans laquelle la hauteur (h) des formations dudit ensemble supplémentaire (106) est sensiblement supérieure ou égale à ladite épaisseur donnée.

11. Gaufrette selon l'une quelconque des revendications précédentes 4 à 10, dans laquelle lesdites formations creuses (104) ont une hauteur comprise entre 1 mm et 30 mm.

12. Gaufrette selon l'une quelconque des revendications précédentes 4 à 11, dans laquelle les formations (106) dudit ensemble supplémentaire sont en un nombre et une distribution permettant de répartir uniformément sur une surface de contraste (110) une pression (P) exercée sur la gaufrette, empêchant la flexion de la gaufrette même en une quelconque région de celle-ci.

13. Plaque pour fabriquer une gaufrette selon l'une quelconque des revendications précédentes 4 à 12, ladite plaque comprenant des moitiés de plaque complémentaires (202, 204) définissant conjointement entre elles un espace destiné à recevoir une pâte à frire qui, après cuisson, constitue ladite gaufrette.
